# EUROPÄISCHE PATENTSCHRIFT

(11) **EP 2 622 196 B1**
(45) Veröffentlichungstag und Bekanntmachung des Hinweises auf die Patenterteilung: **05.11.2014**
(21) Anmeldenummer: 11764146.4
(22) Anmeldetag: 23.09.2011
(51) Int. Cl.: F02F 3/10, F16J 1/04, C10M 111/04

(54) **KOLBENSCHAFTBESCHICHTUNG AUS EINER REIBUNGSARMEN EINLAUFSCHICHT UND EINER VERSCHLEISSARMEN GRUNDSCHICHT**
PISTON SKIRT COATING CONSISTING OF A LOW-FRICTION RUNNING-IN LAYER AND A LOW-WEAR BASE LAYER
REVÊTEMENT DE JUPE DE PISTON COMPOSÉ D'UNE COUCHE DE RODAGE À FAIBLE FROTTEMENT ET D'UNE COUCHE DE BASE À FAIBLE USURE

(30) Priorität: 01.10.2010 DE 102010047279
(43) Veröffentlichungstag der Anmeldung: 07.08.2013
(73) Patentinhaber: KS Kolbenschmidt GMBH, 74172 Neckarsulm (DE)
(72) Erfinder: REHL, Andreas, 74072 Heilbronn (DE); JANKE, Matthias, 74076 Heilbronn (DE)
(74) Vertreter: Greif, Thomas
(86) Internationale Anmeldenummer: PCT/EP2011/066558
(87) Internationale Veröffentlichungsnummer: WO 2012/041769

(56) Entgegenhaltungen:
- EP-A1- 0 939 106
- EP-A1- 1 894 987
- EP-A2- 1 933 022
- JP-A- 7 189 804
- US-A1- 2010 236 516

## Beschreibung

Die vorliegende Erfindung betrifft eine polymerbasierte Kolbenschaftbeschichtung in Form einer Hybridschicht, bestehend aus einer weichen, reibungsarmen Einlaufschicht und einer besonders verschleißarmen optional faserverstärkten Grundschicht sowie ein Verfahren zur Aufbringung der Beschichtung.

Zur Sicherstellung von Einlauf- und Notlaufeigenschaften sind Kolbenschaftbeschichtungen mit einem funktional-graduellen Aufbau bekannt, bei deren Zusammensetzung ein Kompromiss zwischen reibungsminimierenden und verschleißbeständigen Eigenschaften gefunden werden muss.

So weisen besonders verschleißbeständige Kolben kohlefaserverstärkte Beschichtungen mit einen hohen Rauheitswert auf, was zu Nachteilen bezüglich der Prozessüberwachung (erschwerte Schichtdickenbestimmung) und der Einlauf-Phase im Motor (längere Einlaufdauer, erhöhte Reibung) führt. Die harten Fasern wirken bei Zylinderlaufflachen aus Aluminium abrasiv, was zu unerwünschten Poliereffekten bzw. zur Ausbildung von Riefen führen kann.

Aus der US 2009/0156437 A1 ist es bekannt, Kolben für Verbrennungsmotoren mit einer Doppelschicht aus einer inneren, einen Festschmierstoff aufweisenden Polymerschicht und einer äußeren Polymerschicht mit harten Partikeln aus SiN oder Al₂O₃ auszustatten. Die äußere harte Schicht soll die Einlaufzeit der Kolben verringern und das Fressverhalten verbessern.

Analog beschreibt die EP 1 433 838 A1 eine Beschichtung für bewegliche Metallteile, die aus einer inneren Polymerschicht mit darin dispergierten Hartpartikeln aus Al₂O₃ und Siliziumnitrid sowie einer äußeren Schicht ebenfalls mit darin dispergierten Hartpartikeln und Festschmierstoff besteht. Die Hartpartikel der äußeren Schicht weisen einen kleineren Durchmesser als die der inneren Schicht auf, was die Abrasivität der Beschichtung verringern soll.

Die EP 1 894 987 A1 offenbart ein zweischichtiges Beschichtungssystem zur Applikation auf Kolben und zur Schmierung von Kolben. Die äußere Schicht besteht aus 50 bis 70 Gew.-% eines Epoxyharzes oder eines Polyamidimidharzes, 5 bis 20 Gew.-% Bornitrid und 15 bis 30 Gew.-% Siliziumnitrid oder Aluminiumoxid. Die innere Schicht besteht aus 50 bis 70 Gew.-% eines Epoxyharzes oder eines Polyamidimidharzes, 15 bis 30 Gew.-% Polytetrafluorethylen und 5 bis 20 Gew.-% Molybdändisulfid. Weiterhin kann die innere Schicht Graphit enthalten. Die innere Schicht wird auf dem Substrat Kolben abgeschieden und beinhaltet Festschmierstoffe, jedoch kommt ihre Wirkung erst zum Tragen, wenn die äußere Schicht weitestgehend abgetragen ist. Die äußere Schicht beinhaltet Hartstoffe und Festschmierstoffe eingebettet in eine Polymermatrix. Hartstoffe tragen gewöhnlich zur Erhöhung der Verschleißbeständigkeit bei. Vor Verschleiß soll der Kolbenschaft geschützt werden.

Eine verschleißarme Kolbenschaftbeschichtung aus einer Polymerschicht enthaltend ein Gemisch aus harten Kohlenstoff-/oder Aramidfasern und Festschmierstoffen offenbart die EP 1 933 022 A2.

Die EP 1 933 022 A2 betrifft einen Kolben für eine Brennkraftmaschine, insbesondere aus Aluminiumlegierung, wobei auf dem Kolbenschaft zumindest bereichsweise eine 5-25 µm dicke PTFE-freie Lackschicht auf Polymerbasis mit Festschmierstoffen aufgebracht ist; um das Einlauf- und Notlaufverhalten gerade im Bereich der Mischreibung zu verbessern, weist die Lackschicht einen Faseranteil von 16-75 Gew.-% auf. Somit muss diese eine Schicht mindestens zwei Funktionen erfüllen: die Erhöhung der Verschleißbeständigkeit und die Verbesserung der Gleiteigenschaften zwischen den Reibpartnern Zylinderwand und Kolbenschaft.

Die US 2010/0236516 A1 offenbart einen Kolben für eine Brennkraftmaschine, welcher ein Kolbenbasismaterial und eine Schmierfilmbeschichtungszusammensetzung aufweist. Die Beschichtungszusammensetzung besteht aus einer inneren Überzugsschicht, die auf eine Oberfläche des Kolbenbasismaterials aufgebracht wird, und aus einer äußeren Überzugsschicht, die auf die Oberfläche der inneren Überzugsschicht aufgebracht wird. Jede der Überzugsschichten besteht wenigstens aus einem Polyamidimidharz oder einem Polyimidharz und einem Epoxidharz als Bindemittel. Die innere Schicht enthält mindestens 0 bis 50 Gew.-% von Graphit und Molybdändisulfid als Festschmierstoff, während die äußere Schicht mindestens 50 bis 95 Gew.-% von Graphit und Molybdändisulfid als Festschmierstoff enthält. Die US 2010/0236516 A1 offenbart ein zweischichtiges System zur Applikation auf Kolbenoberflächen. Jedoch werden hier in beide Schichten Festschmierstoffe in eine Polymermatrix eingebracht.

Alle hier beschriebenen Beschichtungen besitzen aufgrund der harten und teilweise rauen Außenschicht eine hohe abrasive Wirkung, was hohe Toleranzen in der Fertigung erfordert und den Einsatz der Kolben in Bezug auf das Material der Zylinderlaufflächen einschränkt. Verschleißbeständige Außenschichten führen insbesondere bei Zylinderlaufflächen aus Aluminium zur unerwünschten Poliereffekten bzw. zur Ausbildung von Riefen, was bei einer erhöhten Reibung in einer längeren Einlaufdauer bei der Einlaufphase des Motors führt.

Demgegenüber schlägt die US 5,884,60 für Aluminiumkolben eine innere, harte Beschichtung aus Aluminiumoxid, hergestellt über Anodisierung der Kolbenoberfläche und eine äußere Polymerschicht, enthaltend Festschmierstoffe wie Graphit und Bornitrid. Die Aufbringung der ersten, harten Aluminiumoxidschicht durch Anodisierung der Kolbenoberfläche ist ein aufwendiger und für die Dicke der Schicht schwierig zu kontrollierender Prozess und führt somit zu einer hohen Anzahl nicht brauchbarer Kolben bei der Serienherstellung.

Bezüglich Zylinderlaufflächen aus Aluminium werden bisher gewöhnlich eisenbeschichtete Aluminiumkolben eingesetzt, die eine erhöhte Fresssicherheit gewährleisten und zudem die Zylinderhonung nicht beeinflussen. Im Vergleich zu polymerbasierten Beschichtungen stellt die Eisenbeschichtung einen kostenintensiven Prozess dar. Zusätzlich tragen besonders verschleißbeständige Schichten in der Regel zu höherer Reibung bei, weil das Anpassungsvermögen der Schichten an den Kontaktpartner niedrig ist.

Der Erfindung liegt daher die Aufgabe zu Grunde, Beschichtungen für Kolben für Verbrennungsmotoren bereitzustellen, die in einfacher Weise aufgebracht werden können, verschleißbeständig sind und durch ein verbessertes Einlaufverhalten niedrige Reibungsverluste aufweisen.

Es zeigte sich, dass dies durch eine Doppelschicht einer inneren, harten und einer äußeren, weichen und/oder glatten Einlaufschicht erreicht werden kann.

Gegenstand der vorliegenden Erfindung sind daher Kolben für Verbrennungsmotoren, gekennzeichnet durch eine Schaftbeschichtung aus einer verschleißbeständigen inneren Schicht aus einer Polymermatrix mit darin dispergierten Keramikpartikeln, Aramidfasem und/oder Kohlenstofffasern und einer äußeren Schicht aus einer Polymermatrix mit darin dispergierten Festschmierstoffen.

Erfindungsgemäße Kolben besitzen eine funktionale Innenschicht (also direkt auf der Oberfläche des Kolbens bzw. des noch fertiggestellten Kolbenrohlings aufgebracht) in Kombination mit einer verschleißfesten Substratschicht. Hierdurch verbessert sich das Einlaufverhalten, erhöht sich die Fresssicherheit und durch die Senkung von Reibung vermindert sich der Kraftstoffverbrauch und die CO₂-Emissionen im Betrieb des Verbrennungsmotors.

Die im Hinblick auf einen erhöhten Verschleißschutz optimierte Schaftbeschichtung kann durch die verminderte Rauheit der Doppelschicht in geringeren Fertigungstoleranzen realisiert werden. Die Erweiterung des Anwendungsspektrums von günstigen, polymerbasierten Schaftbeschichtungen führt zu einer erheblichen Kosteneinsparung des Beschichtungsprozesses als Ersatz der kostenintensiven Eisenbeschichtung. Außerdem verringert sich der Ausschuss bei der Serienherstellung wesentlich.

Als Keramikpartikel der inneren Schicht können eine oder mehrere Verbindungen ausgewählt aus der Gruppe TiO₂ (Titanoxid), Siliziumcarbid, Siliziumnitrid , Al₂O₃ (Aluminiumoxid), Siliziumoxid, Eisenoxid, vorzugsweise mit einer Partikelgröße von 0,1 -20 µm eingesetzt werden.

Desweiteren kann die innere Schicht Aramid-, Kohlenstoff- und/oder Polyphenylensulfid-Fasern vorzugsweise mit einer Länge von 20 bis 200 µm als strukturverstärkendes Element bzw. strukturverstärkende Elemente enthalten. Die Keramikpartikel und/oder Faserbestandteile können jeweils einzeln oder als Gemisch verwendet werden, wobei der Anteil der jeweiligen Verstärkungsstoffe in der Schicht vorzugsweise zwischen 5 und 25 Gew% liegen soll (µm = Mikrometer).

Als Festschmierstoff der äußeren Schicht können eine oder mehrere Verbindungen ausgewählt aus der Gruppe MoS (Molybdändisulfid) sowie vorzugsweise PTFE (Polytetrafluorethylen), Graphit, Zinksulfid, Bornitrid, die Sulfide und Telluride von Molybdän, Zinn und Titan, eingesetzt werden. In Anlehnung an die US 6,684,844 B1 und unter Berücksichtigung der Funktion als weiche, anpassungsfähige Beschichtung soll der Festschmierstoffanteil in der äußeren Schicht vorzugsweise zwischen 15 und 40 Gew% betragen.

Die Polymermatrix der inneren Schicht kann aus Polymethylmethacrylat (PMMA), vorzugsweise Polyamidimid (PAI), Polyimid (PI) und/oder Epoxiden, die der äußeren Schicht aus Polymethylmethacrylat (PMMA), Polyamid (PA), Polyamidimid (PAI), Polysiloxanen und/oder Epoxiden, jeweils einzeln oder im Gemisch miteinander bestehen.

Bevorzugt weist die innere Schicht eine Schickdicke von 10 bis 20 Mikrometern auf, hiervon unabhängig die äußere Schicht eine Schichtdicke von 2 bis 20 Mikrometer.

Ebenfalls Gegenstand der Erfindung ist ein Verfahren zur Herstellung einer Schaftbeschichtung für Kolben für Verbrennungsmotoren, bestehend aus einer verschleißbeständigen inneren Schicht aus einer Polymermatrix mit darin dispergierten Keramikpartikeln, Aramid- und/oder Kohlenstofffasern und einer äußeren Schicht, bestehend aus einer Polymermatrix mit darin dispergierten Festschmierstoffen, durch sequenzielles Auftragen der inneren und äußeren Sicht mittels Siebdruck, jeweils gefolgt von einer Trocknung bzw. Aushärtung der Schicht bei erhöhter Temperatur.

Die Auftragung der auf Verschleißbeständigkeit optimierten Grundschicht, enthaltend bevorzugt u.a. Kohlefasern als Verstärkungselemente in einer bevorzugten Schichtdicke von 10 bis 20 µm und einer in Bezug auf Rauheit und Reibungsminimierung optimierten, dünnen Einlaufschicht mit einer bevorzugten Schichtdicke von 2 bis 20 µm, erfolgt insbesondere durch Siebdrucktechnik. Vorzugsweise werden die Schichten nass-in-nass oder inklusive einer kurzen Zwischentrocknung der inneren Grundschicht, gefolgt von der äußeren Beschichtung mit abschließender, längerer Aushärtungsphase der Doppelschicht aufgebracht. Die Temperatur der Aushärtung soll zwischen 150°C und 230°C und einem Zeitintervall von 2 bis 60 Minuten liegen. Zur Verkürzung des Einbrennvorgangs kann zusätzlich gleichzeitig eine Bestrahlung mittels Infrarotlicht miteinbezogen werden.

Die jeweiligen Druckpasten, bestehend aus einem Polymerharz, gelöst in einem organischen, vorzugsweise polar aprotischen Lösungsmittel (z.B. Gammabutyrolacton oder N-Ethylpyrrolidon), und darin eingearbeiteten Füll- und Verstärkungsstoffen, werden mittels Dissolver und Tauchmühlen hergestellt, um Partikel-Agglomerate bzw. Inhomogenitäten zu verhindern. Der Temperaturbereich während der Pastenherstellung soll vorzugsweise zwischen 15°C und 60°C liegen, um eine Polymerisation des Polymermaterials zu verhindern.

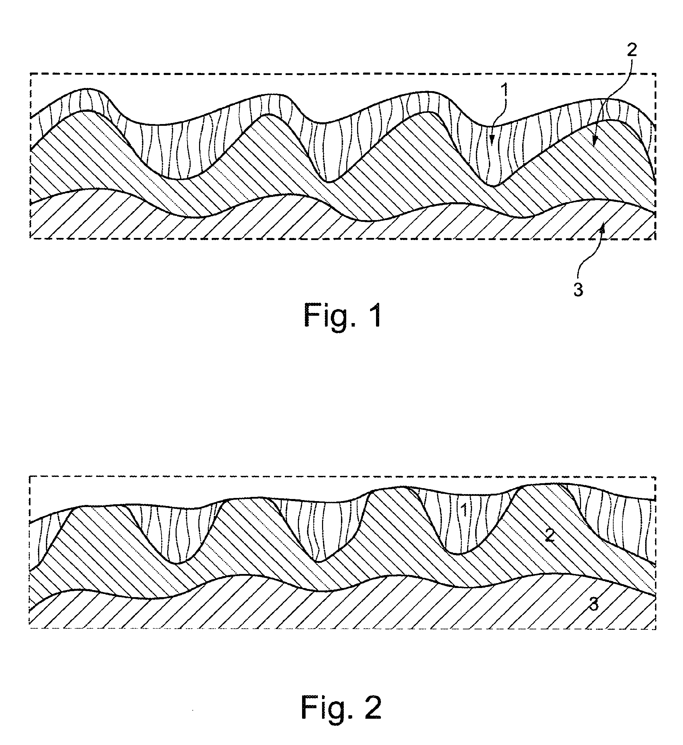

Die Figuren zeigen eine schematische Darstellung der erfindungsgemäßen Doppelschicht (Fig. 1 nach dem Beschichten und Fig. 2 nach der Einlaufphase).

### Bezugszeichenliste

- 1: äußere Schicht
- 2: innere Schicht
- 3: Schaft

## Patentansprüche

1. Kolben für Verbrennungsmotoren, **gekennzeichnet durch** eine Schaftbeschichtung aus einer verschleißbeständigen inneren Schicht aus einer Polymermatrix mit darin dispergierten Keramikpartikeln, Aramidfasern und/oder Kohlenstofffasern und einer äußeren Schicht aus einer Polymermatrix mit darin dispergierten Festschmierstoffen.

2. Kolben für Verbrennungsmotoren nach Anspruch 1, **dadurch gekennzeichnet, dass** als Keramikpartikel der inneren Schicht eine oder mehrere Verbindungen aus der Gruppe Titanoxid, Siliziumcarbid, Siliziumnitrid, Aluminiumoxid, Siliziumoxid, Eisenoxid, vorzugsweise mit einer Partikelgröße von 0,1 bis 20 µm, werden.

3. Kolben für Verbrennungsmotoren nach Anspruch 1 oder 2, **dadurch gekennzeichnet, dass** als Festschmierstoff der äußeren Schicht eine oder mehrere Verbindungen ausgewählt aus der Gruppe MoS₂ (Molybdändisulfid), PTFE (Polytetrafluorethylen), Graphit, Zinksulfid, Bornitrid, die Sulfide und Telluride von Molybdän, Zinn und Titan, eingesetzt wird bzw. werden.

4. Kolben für Verbrennungsmotoren nach einem der Ansprüche 1 bis 3, **dadurch gekennzeichnet, dass** die Polymermatrix der inneren Schicht aus Polyamidimid (PAI), Polyimid (PI) und/oder Epoxiden besteht.

5. Kolben für Verbrennungsmotoren nach einem der Ansprüche 1 bis 4, **dadurch gekennzeichnet, dass** die Polymermatrix der äußeren Schicht aus Polymethylmethacrylat (PMMA), Polyamid (PA), Polyamidimid (PAI), Polysiloxanen und/oder Epoxiden, jeweils einzeln oder im Gemisch miteinander besteht.

6. Kolben für Verbrennungsmotoren nach einem der Ansprüche 1 bis 5, **dadurch gekennzeichnet, dass** die innere Schicht eine Schickdicke von 10 bis 20 Mikrometer aufweist.

7. Kolben für Verbrennungsmotoren nach einem der Ansprüche 1 bis 6, **dadurch gekennzeichnet, dass** die Schichtdicke der äußeren Schicht 2 bis 20 Mikrometer beträgt.

8. Verfahren zur Herstellung einer Schaftbeschichtung für Kolben für Verbrennungsmotoren, bestehend aus eine verschleißbeständigen inneren Schicht aus einer Polymermatrix mit darin dispergierten Keramikpartikeln, Aramidfasern und/oder Kohlenstofffasern und einer äußeren Schicht, bestehend aus einer Polymermatrix mit darin dispergierten Festschmierstoffen, durch sequenzielles Auftragen der inneren und äußeren Sicht mittels Siebdruck, jeweils gefolgt von einer Trocknung der Schicht bei erhöhter Temperatur.

## Claims

1. Piston for internal combustion engines, **characterized by** a skirt coating made of a wear-resistant inner layer made of a polymer matrix with, dispersed therein, ceramic particles, aramid fibres and/or carbon fibres, and an outer layer made of a polymer matrix with solid lubricants dispersed therein.

2. Piston for internal combustion engines according to Claim 1, **characterized in that** ceramic particles selected for the inner layer are one or more compounds from the group titanium oxide, silicon carbide, silicon nitride, aluminium oxide, silicon oxide, iron oxide, preferably with particle size from 0.1 to 20 µm.

3. Piston for internal combustion engines according to Claim 1 or 2, **characterized in that** solid lubricant used for the outer layer is one or more compounds selected from the group of MoS₂ (molybdenum disulphide), PTFE (polytetrafluoroethylene), graphite, zinc sulphide, boron nitride, the sulphides and tellurides of molybdenum, tin and titanium.

4. Piston for internal combustion engines according to any of Claims 1 to 3, **characterized in that** the polymer matrix of the inner layer is composed of polyamideimide (PAI), polyimide (PI) and/or epoxides.

5. Piston for internal combustion engines according to any of Claims 1 to 4, **characterized in that** the polymer matrix of the outer layer is composed of polymethyl methacrylate (PMMA), polyamide (PA), polyamideimide (PAI), polysiloxanes and/or epoxides, respectively individually or in a mixture with one another.

6. Piston for internal combustion engines according to any of Claims 1 to 5, **characterized in that** the thickness of the inner layer is from 10 to 20 micrometres.

7. Piston for internal combustion engines according to any of Claims 1 to 6, **characterized in that** the thickness of the outer layer is from 2 to 20 micrometres.

8. Process for the production of a skirt coating for pistons for internal combustion engines, composed of a wear-resistant inner layer made of a polymer matrix with, dispersed therein, ceramic particles, aramid fibres and/or carbon fibres, and an outer layer made of a polymer matrix with solid lubricants dispersed therein, via sequential application of the inner and outer layer by means of screen printing, respectively followed by drying of the layer at elevated temperature.

## Revendications

1. Piston pour moteurs à combustion interne, **caractérisé par** un revêtement de corps constitué par une couche interne résistant à l'usure en une matrice polymère dans laquelle sont dispersées des particules céramiques, des fibres d'aramide et/ou des fibres de carbone et par une couche externe en une matrice polymère dans laquelle sont dispersés des lubrifiants solides.

2. Piston pour moteurs à combustion selon la revendication 1, **caractérisé en ce qu'**on choisit, comme particules céramiques de la couche interne, un ou plusieurs composés du groupe formé par l'oxyde de titane, le carbure de silicium, le nitrure de silicium, l'oxyde d'aluminium, l'oxyde de silicium, l'oxyde de fer, présentant de préférence une grosseur de particule de 0,1 à 20 µm.

3. Piston pour moteurs à combustion selon la revendication 1 ou 2, **caractérisé en ce qu'**on utilise, comme lubrifiant solide de la couche externe, un ou plusieurs composés choisis dans le groupe formé par le MoS₂ (disulfure de molybdène), le PTFE (polytétrafluoroéthylène), le graphite, le sulfure de zinc, le nitrure de bore, les sulfures et les tellurures de molybdène, d'étain et de titane.

4. Piston pour moteurs à combustion selon l'une quelconque des revendications 1 à 3, **caractérisé en ce que** la matrice polymère de la couche interne est constituée de polyamide-imide (PAI), de polyimide (PI) et/ou d'époxydes.

5. Piston pour moteurs à combustion selon l'une quelconque des revendications 1 à 4, matrice polymère de la couche externe est constituée par du poly(méthacrylate de méthyle) (PMMA), du polyamide (PA), du polyamide-imide (PAI), des polysiloxanes et/ou des époxydes, à chaque fois seuls ou en mélange les uns avec les autres.

6. Piston pour moteurs à combustion selon l'une quelconque des revendications 1 à 5, **caractérisé en ce que** la couche interne présente une épaisseur de couche de 10 à 20 µm.

7. Piston pour moteurs à combustion selon l'une quelconque des revendications 1 à 6, **caractérisé en ce que** l'épaisseur de la couche externe est de 2 à 20 µm.

8. Procédé pour la fabrication d'un revêtement de corps pour des pistons pour moteurs à combustion interne, constitué par une couche interne résistant à l'usure en une matrice polymère dans laquelle sont dispersées des particules céramiques, des fibres d'aramide et/ou des fibres de carbone et par une couche externe, constituée par une matrice polymère dans laquelle sont dispersés des lubrifiants solides par application séquentielle de la couche interne et de la couche externe par sérigraphie, à chaque fois suivie d'un séchage de la couche à température augmentée.
